# EUROPÄISCHE PATENTSCHRIFT

(11) **EP 2 610 099 B1**
(45) Veröffentlichungstag und Bekanntmachung des Hinweises auf die Patenterteilung: **31.01.2018**
(21) Anmeldenummer: 11196199.1
(22) Anmeldetag: 30.12.2011
(51) Int. Cl.: B60L 5/38, B60M 1/30, B61B 3/02, B62D 65/18

(54) **Transportvorrichtung für leichte Fördergüter, insbesondere Fahrzeugteile**
Transport device for light conveyed goods, in particular vehicle components
Dispositif de transport pour marchandises légères à transporter, notamment pièces de véhicule

(43) Veröffentlichungstag der Anmeldung: 03.07.2013
(73) Patentinhaber: Siemens Aktiengesellschaft, 80333 München (DE)
(72) Erfinder: Aßmann, Roland Heinz, 63654 Büdingen (DE); Schmidt, Gerhard, 91322 Gräfenberg (DE); Depmeier, Sebastian, 91126 Schwabach (DE)

(56) Entgegenhaltungen:
- EP-A1- 0 524 084
- EP-A1- 1 810 868
- WO-A1-2008/095634

## Beschreibung

Die Erfindung betrifft eine Transportvorrichtung insbesondere für Fahrzeugteile innerhalb von Fahrzeugmontageeinrichtungen, die sich beispielsweise entlang Transportstrecken oder Produktionsstraßen erstrecken.

Zur Optimierung von Fertigungs- oder Transportabläufen werden in Fahrzeugmontageeinrichtungen seit Jahrzehnten Fördersysteme verwendet. Durch die Fördersysteme werden zu fertigende Fahrzeuge, insbesondere Automobile oder Teile davon, von einer Arbeitsstation zur nächsten transportiert. Weit verbreitet sind Boden- und Hängefördersysteme.

Üblicherweise werden zu montierende Fahrzeugteile mittels Hängeförderern transportiert. Stark verbreitet sind Elektrohängebahnen. Aus DE 31 46 807 A1 ist ein Fördersystem bekannt, bei der eine Kraftfahrzeugkarosserie zum Transport an Trägern aufgehängt ist.

Bekannte Hängefördersysteme umfassen entweder Kettenförderer, "Power & Free" Förderer oder Elektrohängebahnen. "Power & Free" Fördersysteme weisen ein Zweiebenensystem auf, bei dem in einer oberen Ebene eine Förderkette läuft. In einer unteren Ebene befinden sich von der Förderkette geschleppte Laufwagen. Transportgut läßt sich von der Förderkette trennen. Trotz kontinuierlich laufender Förderkette ist ein diskontinuierlicher Materialfluß möglich. "Power & Free" Fördersysteme lassen jedoch eine nur bedingt flexible Transportweg- bzw. Linienführung und Fördergeschwindigkeitssteuerung zu. Kreisförderer-basierte System ermöglichen weder eine verzweigte Linienführung noch eine flexible Geschwindigkeitssteuerung.

Elektrohängebahnen sind in einem Synchronbetrieb aufwändig zu steuern. Insbesondere sind für jedes Hängebahnfahrzeug eine eigene Fahrzeugsteuerung und mindestens eine Antriebseinrichtung erforderlich. Darüber hinaus können Steigungs- oder Gefällestrecken mit Elektrohängebahnen ohne Schlepphilfe nur mit ausreichender Antriebsleistung und Traktion befahren werden.

In EP 2 316 716 A1 ist eine Transportvorrichtung für eine Fahrzeugmontageeinrichtung mit zumindest einem ersten und zweiten Lasttransportmittel zum Transport zumindest einer hängenden Last entlang eines Transportwegs beschrieben. Die Lasttransportmittel sind entlang des Transportwegs nebeneinander kollisionsfrei bewegbar. Entlang eines ersten Transportwegabschnitts erstreckt sich eine erste Führungsschiene, die zumindest ein Aufnahme- bzw. Stützelement für zumindest ein mit dem ersten Lasttransportmittel verbundenes Rad aufweist, das entlang des Transportwegs mittels einer dem zweiten Lasttransportmittel zugeordneten Motorantriebseinrichtung abrollend bewegbar ist. Außerdem erstreckt sich entlang eines zweiten Transportwegabschnitts im wesentlichen parallel zur ersten Führungsschiene eine zweite Führungsschiene, die zumindest ein Aufnahme- bzw. Stützelement für zumindest ein mit dem zweiten Lasttransportmittel verbundenes Rad aufweist, das entlang des Transportwegs mittels der dem zweiten Lasttransportmittel zugeordneten Motorantriebseinrichtung abrollend bewegbar ist. Eine solche Transportvorrichtung ist auch aus EP 0 379 207 A2 bekannt.

Aus EP 1 810 868 A1 ist ein Fördersystem mit mindestens einer Laufschiene bekannt, an der mindestens ein Laufwagen oder ein Fördergutträger längs einer Förderstrecke geführt bewegbar ist. Dabei enthalten die Laufwagen mindestens einen Laufwagenkopf, mit dem sich dieser auf der Laufschiene abstützt. Der Laufwagenkopf besitzt einen Rahmenteil, in dem mindestens zwei Laufrollen drehbar befestigt sind. Die Laufschiene besteht dabei mindestens aus einem Längsprofil, das mindestens zwei seitlich auskragende Laufflächenteile zur Abstützung der Laufrollen aufweist. Die Laufschiene ist als Systemschiene ausgebildet, die mindestens zwei Führungskanäle zur Aufnahme von Antriebselementen oder Ankoppelelementen enthält und Aufnahmemittel mindestens zur Aufnahme von Stromzuführungsschienen aufweist. Dabei ist der Rahmenteil als Längsprofilträger ausgebildet, der mindestens zwei Längskammern zur Aufnahme der Laufrollen und mindestens eine mittlere Längskammer zur Aufnahme von Ankoppel- oder Antriebselementen enthält.

In WO 2008/095634 A1 ist eine schienengebundene Förderanlage beschrieben, die mit einem selbstfahrenden Fahrgestell ausgerüstet ist. Das Fahrgestell weist mindestens ein von einem Motor antreibbares und mit einer Schiene zusammenwirkendes Reib- bzw. Zahnrad sowie einen Lastenträger auf. Die Schiene ist - bezogen auf eine horizontale Anordnung - im Querschnitt aufrecht stehend ausgebildet und angeordnet. Das Fahrgestell ist im Wesentlichen seitlich der Schiene angeordnet. Des Weiteren stützt sich das Fahrgestell mit oberen und unteren, Querkräfte aufnehmenden Rädern und weiteren, Vertikalkräfte aufnehmenden Rädern an der Schiene ab. Der Lastenträger ist auf einer der Schiene abgewandten Seite sowie um eine senkrecht zur Ebene der Schiene ausgerichteten Achse verschwenkbar am Fahrgestell angeordnet. Die Schiene weist an der Oberseite ein nach oben offenes U-Profil für die oberen Räder und an der Unterseite ein nach unten offenes U-Profil für die unteren Räder zur Aufnahme der Querkräfte auf. Außerdem weist die Schiene ein seitliches gegen das Fahrgestell offenes U-Profil für weitere Räder zur Aufnahme der Vertikalkräfte auf. Dabei sind die Räder als Laufräder ausgebildet.

Aus DE 10 2008 031153 A1 ist ein Schienensystem bekannt, bei dem Schienenstöße durch ein Verbindungselement überbrückt werden. Dabei sind Schienenenden fluchtend zueinander ausgerichtet und in Schienenrichtung verschiebbar. Schienen und Verbindungselement sind derart ausgebildet, dass in Laufflächen am Schienenstoß keine Unterbrechung entsteht.

In DE 20 2009 011398 U1 ist ein Fahrzeug einer Hängeförderbahn beschrieben, die mindestens einen Laufwagen umfasst. Der mindestens eine Laufwagen weist einen Trägerrahmen mit Rollen zum Abrollen auf einer Förderschiene auf. Der Trägerrahmen ist als Blechumformteil mit mindestens einem umgeformten Trägerblech ausgeführt und bildet dabei mindestens einen geschlossenen Hohlquerschnitt.

Aus EP 0 524 084 A1 ist eine Transportvorrichtung bekannt, die ein Lasttransportmittel zum Transport zumindest einer Last entlang eines Transportwegs und eine sich entlang eines Transportwegabschnitts erstreckende Schiene umfaßt. Die Schiene weist einen U-förmigen Abschnitt mit abgekröpften Schenkelenden auf, die Laufflächen für Rollenpaare an Lasttransportmitteln bilden. Zwischen Schenkeln der Schiene ist innerhalb der Schiene eine Schleifleitung angeordnet. Das Lasttransportmittel umfaßt ein Laufwerk mit einem Trägerelement, dessen Schenkel die Schenkel der Schiene umgreifen und Lagersitze für Rollenachsen des Lasttransportmittels bilden.

Der vorliegenden Erfindung liegt die Aufgabe zugrunde, eine Transportvorrichtung für leichte Fördergüter, insbesondere Fahrzeugteile, zu schaffen, die gegenüber bestehenden Lösungen leichter, kompakter und vielseitiger verwendbar ist.

Diese Aufgabe wird erfindungsgemäß durch eine Transportvorrichtung mit den in Anspruch 1 angegebenen Merkmalen gelöst. Vorteilhafte Weiterbildungen der vorliegenden Erfindungen sind in den abhängigen Ansprüche angegeben.

Die erfindungsgemäße Transportvorrichtung umfasst zumindest ein Lasttransportmittel zum Transport zumindest einer hängenden Last entlang eines Transportwegs. Entlang zumindest eines Transportwegabschnitts erstreckt sich zumindest eine Schiene, die ein U-förmiges Profil mit abgekröpften Schenkelenden aufweist, die zumindest eine erste und zweite Lauffläche für Räder- oder Rollenpaare an Lasttransportmitteln bilden. Zwischen Schenkeln der Schiene ist innerhalb der Schiene eine Schleifleitung oder Spulenanordnung zur Energieversorgung von motorangetriebenen Lasttransportmitteln angeordnet. Dem zumindest einen Lasttransportmittel ist ein Fahr- bzw. Laufwerk zugeordnet, das ein Trägerelement mit U-förmigem Profil umfasst. Schenkel des Trägerelements umgreifen die Schenkel der Schiene und bilden Lagersitze oder -flansche für Rad- oder Rollenachse des Lasttransportmittels. Auf diese Weise können insbesondere kompakte Elektrohänge- oder -tragbahnsysteme mit geringem Gewicht realisiert werden.

Das Lasttransportmittel kann beispielsweise einen Elektromotor und eine Stromabnehmeranordnung umfassen, die zumindest einen Kontakt zur Schleifringleitung aufweist. Alternativ dazu kann das Lasttransportmittel einen Linearmotor umfassen, der mit der innerhalb der Schiene angeordneten Spulenanordnung einen Luftspalt bildet.

Entsprechend einer vorteilhaften Ausgestaltung der vorliegenden Erfindung erstreckt sich die Schiene entlang zumindest einer Steigungs- oder Synchronstrecke. In diesem Fall ist anstelle der oder zusätzlich zur Schleifleitung oder Spulenanordnung entlang der Steigungs- oder Synchronstrecke zwischen Schenkeln der Schiene innerhalb der Schiene eine umlaufende Kette mit Mitnehmerelementen für Lasttransportmittel angeordnet. Alternativ dazu kann die Schiene zumindest entlang der Steigungsstrecke eine Hohlkammer zur Aufnahme eines ersten Kettenabschnitts einer umlaufenden Kette mit Mitnehmerelementen für Lasttransportmittel aufweisen. Zusätzlich kann die Schiene zumindest entlang der Steigungsstrecke eine an einem Schenkel offene Kammer zur Aufnahme eines zweiten Kettenabschnitts der umlaufenden Kette aufweisen. Beispielsweise nimmt die an einem Schenkel offene Kammer einen in Zugrichtung laufenden Kettenabschnitt auf, während die Hohlkammer einen rücklaufenden Kettenabschnitt aufnimmt. Mit einem zusätzlichen Kettenantrieb kann ein Elektromotor insbesondere im Hinblick auf eine an Steigungsstrecken erforderliche Motorleistung schwächer dimensioniert werden. Dies ergibt einen reduzierten Platzbedarf und ermöglicht eine Kostenreduktion bei Verwendung leistungsschwächerer Elektromotoren.

Die vorliegende Erfindung wird nachfolgend an einem Ausführungsbeispiel anhand der Zeichnung näher erläutert. Es zeigt
- Figur 1: ein Hängefördersystem in perspektivischer Darstellung,
- Figur 2: das Hängefördersystem gemäß Figur 1 im Querschnitt,
- Figur 3: ein Hängefördersystem mit Hohlkammern in einer Schiene zur Aufnahme einer umlaufenden Kette für eine Steigungsstrecke in perspektivischer Darstellung,
- Figur 4: das Hängefördersystem gemäß Figur 3 im Querschnitt,
- Figur 5: ein Tragfördersystem in perspektivischer Darstellung,
- Figur 6: das Tragfördersystem gemäß Figur 5 im Querschnitt,
- Figur 7: eine Schiene mit Stoßverbindungselementen für ein Hänge- oder Tragfördersystem in perspektivischer Darstellung,
- Figur 8: die Schiene gemäß Figur 7 im Querschnitt.

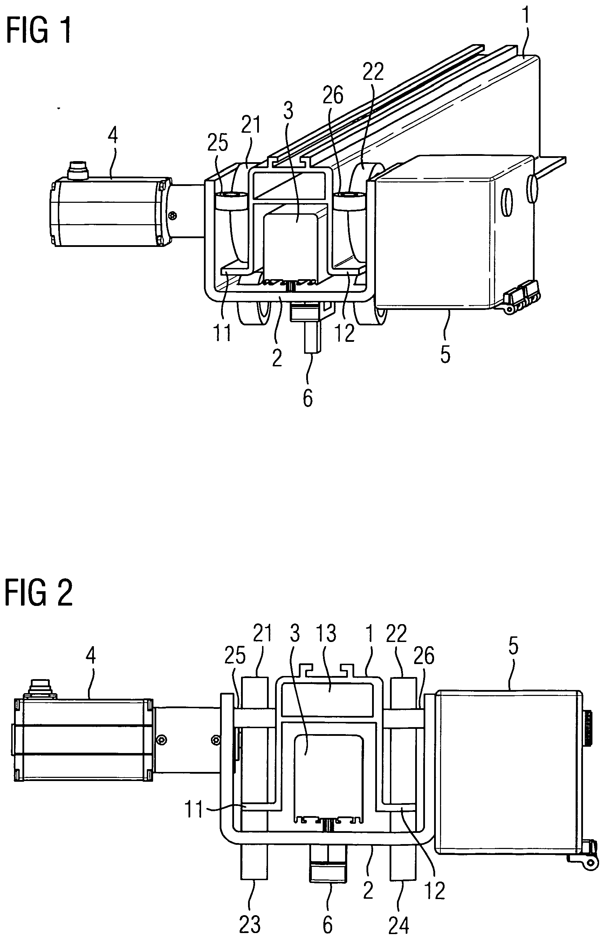

Das in den Figuren 1 und 2 dargestellte Hängefördersystem umfasst zumindest ein Lasttransportmittel zum Transport zumindest einer Last entlang eines Transportwegs. Die Last, die in den Figuren nicht explizit dargestellt ist, wird an einem Lastaufhängungspunkt 6 aufgehängt. Entlang eines Transportwegabschnitts erstreckt sich eine Schiene 1, die ein U-förmiges Profil mit abgekröpften Schenkelenden 11, 12 aufweist. Die abgekröpften Schenkelenden 11, 12 bilden obere und untere Laufflächen für jeweils ein Räder- oder Rollenpaar 21, 23, 22, 24 an Lasttransportmitteln. Dabei ist ein erstes Räder- oder Rollenpaar 21, 23 an einem ersten abgekröpften Schenkelende 11 angeordnet. In entsprechender Weise ist ein zweites Räder- oder Rollenpaar 22, 24 an einem zweiten abgekröpften Schenkelende 12 angeordnet. Ein erstes Rad oder eine erste Rolle 21, 22 eines Räder- oder Rollenpaars steht in Reibschluss mit einer oberen Lauffläche, während ein zweites Rad oder eine zweite Rolle 23, 24 eines Räder- oder Rollenpaars in Reibschluss mit einer unteren Lauffläche steht. Die Schiene 1 weist im vorliegenden Ausführungsbeispiel an ihrer Oberseite einen Schraubkanal auf, der eine direkte und einfache Aufhängung der Schiene 1 an Trägern oder Halterungen ermöglicht. Grundsätzlich können die unteren Laufflächen - alternativ zu einer Anordnung an den abgekröpften Schenkelenden 11, 12 - durch zusätzliche an die Schiene 1 angeformte Führungselemente gebildet sein, die beispielsweise oberhalb der abgekröpften Schenkelenden 11, 12 angeordnet sind.

Die Räder oder Rollen 21, 23, 22, 24 eines Räder- oder Rollenpaars sind vorzugsweise mittels einer Spannvorrichtung gegeneinander vorgespannt. Dabei ist die erste Rolle 21, 22 eines Rollenpaars jeweils als Tragrolle ausgestaltet. Die zweite Rolle 23, 24 eines Rollenpaars ist dagegen jeweils als Gegendruckrolle ausgestaltet. Zusätzlich zu Trag- und Gegendruckrollen sind Führungsrollen 25, 26 vorgesehen, die jeweils zwischen den Schenkeln der Schiene 1 und den Schenkeln des Trägerelements 2 angeordnet sind. Die Führungsrollen 25, 26 stehen jeweils in Formschluss mit einem Schenkel der Schiene 1 und mit einem Schenkel des Trägerelements 2.

Zwischen Schenkeln der Schiene 1 ist innerhalb der Schiene 1 eine Schleifleitung 3 oder Spulenanordnung zur Energieversorgung von motorangetriebenen Lasttransportmitteln angeordnet. Im vorliegenden Ausführungsbeispiel umfasst das Lasttransportmittel einen Elektromotor 4 und eine Stromabnehmeranordnung, die zumindest einen Kontakt zur Schleifleitung 3 aufweist. Alternativ dazu kann das Lasttransportmittel auch einen Linearmotor umfassen, der mit der innerhalb der Schiene 1 angeordneten Spulenanordnung einen Luftspalt bildet.

Dem Lasttransportmittel sind ein Fahr- und ein Laufwerk zugeordnet, die jeweils ein Trägerelement 2 mit U-förmigem Profil umfassen. Dabei umgreifen Schenkel eines Trägerelements 2 die Schenkel der Schiene 1 und bilden Lagersitze oder -flansche für Rad- oder Rollenachsen des Lasttransportmittels. Das Fahr- und das Laufwerk des Lasttransportmittels sind vorzugsweise durch eine in den Figuren nicht explizit dargestellte Traverse verbunden, die jeweils schwenkbar an das Fahr- und das Laufwerk angekoppelt ist.

Bei dem in den Figuren 1 und 2 dargestellten Hängefördersystem sind die Schiene 1 und das Trägerelement 2 mit ihren Schenkeln entgegengesetzt zueinander angeordnet. Die Schleifringleitung 3 ist mit ihren Kontakten dem Trägerelement 2 des Lasttransportmittels zugewandt angeordnet. Außerdem sind die Schiene 1, die Schleifleitung 3 und das Trägerelement 2 des Lasttransportmittels im Wesentlichen konzentrisch zueinander angeordnet. Während der Elektromotor 4 am Fahrwerk an einem ersten Schenkel des Trägerelements 2 montiert ist, erfolgt eine Befestigung einer Steuerungseinheit 5 an einem gegenüberliegenden zweiten Schenkel des Tragelements 2. Dabei wird vorzugsweise eine ausgeglichene Gewichtsverteilung realisiert. Zwischen Schiene 1 und Schleifringleitung 3 bestehen freie Zwischenräume, die beispielsweise für Halterungen oder Einspeisungen an der Schleifringleitung 3, Dehnstöße oder Aufständerungen genutzt werden können.

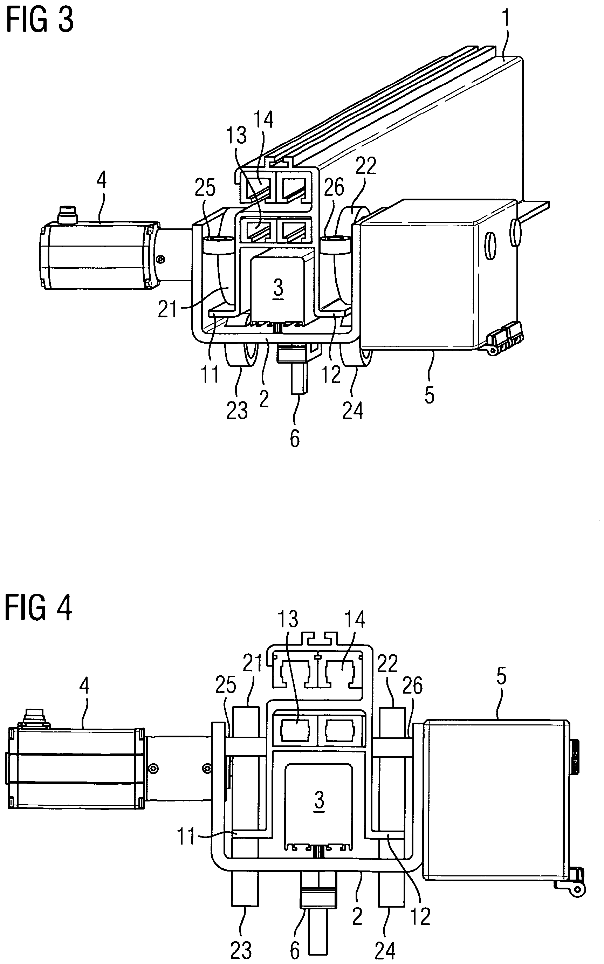

Bei dem in den Figuren 3 und 4 dargestellten Hängefördersystem, dessen Schiene 1 sich entlang einer Steigungs- oder Synchronstrecke erstrecken kann, weist die Schiene 1 zumindest entlang der Steigungs- oder Synchronstrecke eine Hohlkammer 13 zur Aufnahme eines ersten Kettenabschnitts einer umlaufenden Kette mit Mitnehmerelementen für Lasttransportmittel auf. Synchronstrecken dienen einem Transport von Förderelementen mit konstantem Abstand und konstanter Geschwindigkeit, beispielsweise um Montagearbeiten an einem Fließband durchführen zu können. Zusätzlich weist die Schiene 1 zumindest entlang der Steigungs- oder Synchronstrecke eine an einem Schenkel offene Kammer 4 zur Aufnahme eines zweiten Kettenabschnitts der umlaufenden Kette auf. Beispielsweise nimmt die an einem Schenkel offene Kammer 14 einen in Zugrichtung laufenden Kettenabschnitt auf, während die Hohlkammer 13 einen rücklaufenden Kettenabschnitt aufnimmt.

Die Mitnehmerelemente können beispielsweise an einem Anfang einer Steigungs- oder Synchronstrecke durch eine Kulissensteuerung miteinander in Eingriff gebracht werden. Darüber hinaus kann zumindest ein Mitnehmerelement starr an einem Fahrzeugkörper angebracht sein, und Schienenaufhängungen können das zumindest eine starr aufgehängte Mitnehmerelement C-förmig umschließen.

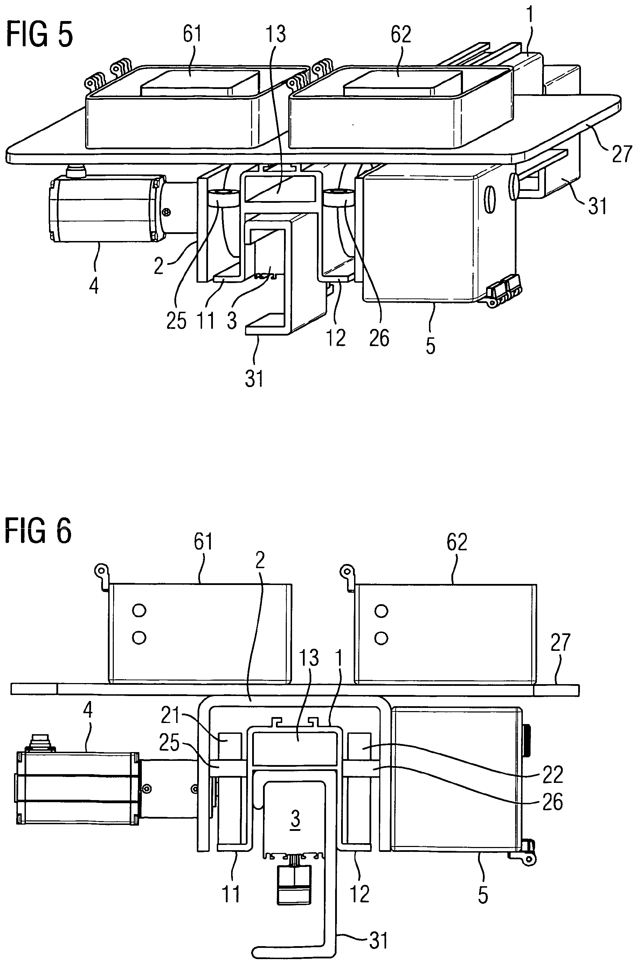

In den Figuren 5 und 6 ist ein Tragfördersystem dargestellt, das zumindest ein Lasttransportmittel zum Transport von Lasten 61, 62 auf einer Trägerplatte 27 entlang eines Transportwegs umfasst. Wie bei den in den Figuren 1 bis 4 dargestellten Hängefördersystemen erstreckt sich entlang eines Transportwegabschnitts eine Schiene 1, die ein U-förmiges Profil mit abgekröpften Schenkelenden 11, 12 aufweist. Die abgekröpften Schenkelenden 11, 12 bilden eine erste und zweite Lauffläche für ein Räder- oder Rollenpaar 21, 22 an einem Lasttransportmittel. Dabei ist ein erstes Rad oder eine erste Rolle 21 an einem ersten abgekröpften Schenkelende 11 angeordnet. In entsprechender Weise ist ein zweites Rad oder eine zweite Rolle 22 an einem zweiten abgekröpften Schenkelende 12 angeordnet. Die Räder oder Rollen 21, 22 stehen dabei jeweils in Reibschluss mit einer oberen Lauffläche an den abgekröpften Schenkelenden 11, 12 und sind als Tragrollen ausgestaltet.

Zusätzlich zu Tragrollen sind bei dem in den Figuren 5 und 6 dargestellten Tragfördersystem Führungsrollen 25, 26 vorgesehen, die jeweils zwischen den Schenkeln der Schiene 1 und den Schenkeln des Trägerelements 2 angeordnet sind. Die Führungsrollen 25, 26 stehen jeweils in Formschluss mit einem Schenkel der Schiene 1 und mit einem Schenkel des Trägerelements 2. Zwischen den Schenkeln der Schiene 1 ist innerhalb der Schiene 1 eine Schleifleitung 3 oder Spulenanordnung zur Energieversorgung von motorangetriebenen Lasttransportmitteln angeordnet. Des Weiteren umfasst das Lasttransportmittel einen Elektromotor 4 und eine Stromabnehmeranordnung, die einen Kontakt zur Schleifringleitung 3 aufweist.

Dem Lasttransportmittel sind entsprechend Figur 5 und 6 ein Fahr- und ein Laufwerk zugeordnet, die jeweils ein Trägerelement 2 mit U-förmigem Profil umfassen. Dabei umgreifen Schenkel eines Trägerelements 2 die Schenkel der Schiene 1 und bilden Lagersitze oder -flansche für Rad- oder Rollenachsen des Lasttransportmittels. Das Fahr- und das Laufwerk des Lasttransportmittels sind vorzugsweise durch die Trägerplatte 27 verbunden, die jeweils schwenkbar an das Fahr- und das Laufwerk angekoppelt ist.

Die Schiene 1 und das Trägerelement 2 sind bei dem in den Figuren 5 und 6 dargestellten Ausführungsbeispiel mit ihren Schenkeln in gleicher Richtung zueinander angeordnet. Die Schleifringleitung 3 ist mit ihren Kontakten vom Trägerelement 2 des Lasttransportmittels und der darauf montierten Trägerplatte 27 abgewandt angeordnet. Wie bei den in den Figuren 1 bis 4 dargestellten Hängefördersystemen sind die Schiene 1, die Schleifleitung 3 und das Trägerelement 2 des Lasttransportmittels im wesentlichen konzentrisch zueinander angeordnet. Während der Elektromotor 4 am Fahrwerk an einem ersten Schenkel des Trägerelements 2 montiert ist, erfolgt eine Befestigung einer Steuerungseinheit 5 an einem gegenüberliegenden zweiten Schenkel des Tragelements 2.

Tragfördersysteme sind insbesondere bei Montagearbeiten an leichten Lasten von Vorteil. Da bei Tragfördersystemen keine vertikalen Tragstrukturen erforderlich sind, sind Transportgüter grundsätzlich gut für eine weitere Bearbeitung zugänglich. Für ein Aufständern von Tragfördersystemen können Stützfüße 31 verwendet werden, die sowohl eine nachträgliche Montage als auch eine spätere Demontage der Schleifringleitung 3 ermöglichen.

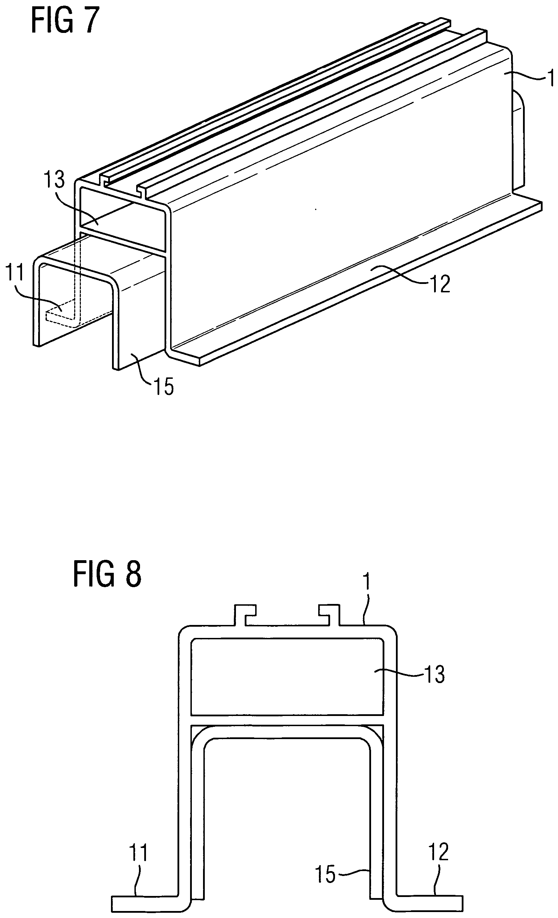

In den Figuren 7 und 8 ist dargestellt, dass die Schiene 1 der in den Figuren 1 bis 6 dargestellten Hänge- bzw. Tragfördersysteme mehrere mittels Stoßverbindungselementen 15 miteinander verbundene Schienensegmente umfasst. Dabei können sowohl Querkräfte als auch Momente übertragen werden. Mittels der Stoßverbindungselemente 15 können Schienensegmente so zueinander ausgerichtet werden, dass sie an ihren Anschlüssen miteinander fluchten. Dies ermöglicht eine reibungslose Überfahrt der Hänge- bzw. Tragförderfahrzeugen über einen Schienenstoß.

Aufgrund häufig unterschiedlicher Wärmeausdehnungskoeffizienten von Schienensegmenten und tragenden Strukturelementen sind üblicherweise Dehnstöße zwischen Schienensegmenten erforderlich. Damit können die unterschiedlichen Wärmeausdehnungskoeffizienten bei erwarteten Temperaturdifferenzen kompensiert werden. Ein Dehnstoß umfasst beispielsweise zwei ineinander greifende Bauteile, die zwischen die Schienensegmente eingesetzt werden. In einem Bereich einer Lauffläche einer Tragrolle greift ein Finger eines Bauteils in eine korrespondierende Tasche des anderen Bauteils. Dadurch entsteht eine ununterbrochene Lauffläche bei gleichzeitig möglicher Bewegung des Fingers in Längsrichtung der Tasche.

Des Weiteren ist zwischen Schleifleistung 3 und Schiene 1 ein Spalt vorgesehen, der für eine Verbindung von Schienenelementen, für eine Einspeisung an einer Stromschiene bzw. für eine Aufständerung einer Schiene 1 multifunktional verwendbar ist. Darüber hinaus weist die Schleifleitung 3 eine geschlossene, gegen Zugriff von außen geschützte Form auf, so daß sie auch in einem Werkerbereich verwendbar ist.

Die Anwendung der vorliegenden Erfindung ist nicht auf die beschriebenen Ausführungsbeispiele: beschränkt.

## Patentansprüche

1. Transportvorrichtung für leichte. Fördergüter, insbesondere Fahrzeugteile, mit.
- zumindest einem Lasttransportmittel zum Transport zumindest einer Last (61, 62) entlang eines Transportwegs,
- zumindest einer sich entlang zumindest eines Transportwegabschnitts erstreckenden Schiene (1), die ein U-förmiges Profil mit abgekröpften Schenkelenden (11, 12) aufweist, die zumindest eine erste und zweite Lauffläche für Räder- oder Rollenpaare (21-24) an Lasttransportmitteln bilden,
- einer zwischen Schenkeln der Schiene (1) innerhalb der Schiene (1) angeordneten Schleifleitung (3) zur Energieversorgung von motorangetriebenen Lasttransportmitteln, wobei die Schleifleitung (3) eine geschlossene, gegen Zugriff von außen geschützte Form aufweist und in einem Nerkerbéreich verwendbar ist,
- einem dem zumindest einen Lasttransportmittel zugeordneten Fahr- und/oder Laufwerk, das ein Trägerelement (2) mit U-förmigem Profil umfasst, dessen Schenkel die Schenkel der Schiene (1) umgreifen und Lagersitze oder -flansche für Rad- oder Rollenachsen des Lasttransportmittels bilden,
- einem zwischen Schleifleitung (3) und Schiene (1) vorgesehenen Spalt, der für eine Verbindung von Schienenelementen, für eine Einspeisung an einer Stromschiene und/oder für eine Aufständerung einer Schiene multifunktional verwendbar ist.

2. Transportvorrichtung nach Anspruch 1,
bei der die abgekröpften Schenkelenden (11, 12) obere und untere Laufflächen für jeweils ein Räder- oder Rollenpaar (21, 23; 22, 24) an Lasttransportmitteln bilden, und bei der ein erstes Räder- oder Rollenpaar (21, 23) an einem ersten abgekröpften Schenkelende (11) angeordnet ist, und bei der ein zweites Räder- oder Rollenpaar (22, 24) an einem zweiten abgekröpften Schenkelende (12) angeordnet ist, und bei der ein erstes Rad oder eine erste Rolle (21, 22) eines Räder- oder Rollenpaars in Reibschluss mit einer oberen Lauffläche steht, und bei der ein zweites Rad oder eine zweite Rolle (23, 24) eines Räder- oder Rollenpaars in Reibschluss mit einer unteren Lauffläche steht.

3. Transportvorrichtung nach Anspruch 2,
bei der die Räder oder Rollen (21, 23; 22, 24) eines Räder- oder Rollenpaars mittels einer Spannvorrichtung gegeneinander vorgespannt sind.

4. Transportvorrichtung nach einem der Ansprüche 2 oder 3,
bei der die erste Rolle (21, 22) eines Rollenpaars jeweils als Tragrolle ausgestaltet ist, und bei der die zweite Rolle (23, 24) eines Rollenpaars jeweils als Gegendruckrolle ausgestaltet ist.

5. Transportvorrichtung nach einem der Ansprüche 2 bis 4,
bei der zwischen den Schenkeln der Schiene (1) und den Schenkeln des Trägerelements (2) jeweils zumindest eine Führungsrolle (25, 26) angeordnet ist, die in Formschluss mit einem Schenkel der Schiene (1) und mit einem Schenkel des Trägerelements (2) steht.

6. Transportvorrichtung nach einem der Ansprüche 1 bis 5,
bei der die Schiene (1), die Schleifleitung (3) oder Spulenanordnung und das Trägerelement (2) des Lasttransportmittels im Wesentlichen konzentrisch zueinander angeordnet sind.

7. Transportvorrichtung nach einem der Ansprüche 1 bis 6,
bei der die Schiene (1) mehrere mittels Stoßverbindungselementen (15) miteinander verbundene Schienensegmente umfasst.

8. Transportvorrichtung nach einem der Ansprüche 1 bis 7,
bei der sich die Schiene (1) entlang zumindest einer Steigungs- oder Synchronstrecke erstreckt, und bei der entlang der Steigungs- oder Synchronstrecke anstelle der oder zusätzlieh Schleifleistung (3) oder Spulenanordnung zwischen den Schenkeln der Schiene (1) innerhalb der Schiene eine umlaufende Kette mit Mitnehmerelementen für Lasttransportmittel angeordnet ist.

9. Transportvorrichtung nach einem der Ansprüche 1 bis 7,
bei der sich die Schiene (1) entlang zumindest einer Steigungs- oder Synchronstrecke erstreckt, und bei der die Schiene (1) zumindest entlang der Steigungs- oder Synchronstrecke eine Hohlkammer (13) zur Aufnahme eines ersten Kettenabschnitts einer umlaufenden Kette mit Mitnehmerelementen für Lasttransportmittel aufweist, und bei der die Schiene (1) zumindest entlang der Steigungs- oder Synchronstrecke eine an einem Schenkel offene Kammer (14) zur Aufnahme eines zweiten Kettenabschnitts der umlaufenden Kette aufweist.

10. Transportvorrichtung nach Anspruch 9,
bei der die Mitnehmerelemente an einem Anfang einer Steigungs- oder Synchronstrecke durch eine Kulissensteuerung miteinander in Eingriff gebracht werden.

11. Transportvorrichtung nach einem der Ansprüche 9 oder 10,
bei der zumindest ein Mitnehmerelement starr an einem Fahrzeugkörper angebracht ist und Schienenaufhängungen das zumindest eine starr aufgehängte Mitnehmerelement C-förmig umschließen.

12. Transportvorrichtung nach einem der Ansprüche 9 bis 11,
bei der die an einem Schenkel offene Kammer (14) einen in Zugrichtung laufenden Kettenabschnitt oder ein ähnlich wirkendes Zugmittel aufnimmt, und bei der die Hohlkammer (13) einen rücklaufenden Kettenabschnitt aufnimmt.

13. Transportvorrichtung nach einem der Ansprüche 1 bis 12,
bei der die Schiene (1) und das Trägerelement (2) mit ihren Schenkeln entgegengesetzt zueinander angeordnet sind, und bei der die Schleifringleitung (3) mit ihren Kontakten dem Trägerelement (2) des Lasttransportmittels zugewandt angeordnet ist, und bei der das Lasttransportmittel ein Fahrzeug eines Elektrohängebahnsystems ist.

14. Transportvorrichtung nach einem der Ansprüche 1 bis 12,
bei der die Schiene (1) und das Trägerelement (2) mit ihren Schenkeln in gleicher Richtung zueinander angeordnet sind, und bei der die Schleifringleitung (3) mit ihren Kontakten vom Trägerelement (2) des Lasttransportmittels abgewandt angeordnet ist, und bei der das Lasttransportmittel ein Fahrzeug eines Elektrotragbahnsystems ist.

15. Transportvorrichtung nach einem der Ansprüche 1 bis 14, bei der das Lasttransportmittel einen Elektromotor (4) und eine Stromabnehmeranordnung umfasst, die zumindest einen Kontakt zur Schleifringleitung (3) aufweist.

16. Transportvorrichtung nach einem der Ansprüche 1 bis 12, bei der das Lasttransportmittel einen Linearmotor umfasst, der mit einer innerhalb der Schiene (1) angeordneten Spulenanordnung einen Luftspalt bildet.

## Claims

1. Transporting apparatus for lightweight articles, in particular vehicle parts, having
- at least one load-transporting means for transporting at least one load (61, 62) along a transporting path,
- at least one rail (1) which extends along at least one transporting-path portion and has a U-shaped profile with angled leg ends (11, 12), which form at least a first and second running surface for pairs of wheels or rollers (21-24) on load-transporting means,
- a conductor line (3) which is arranged between legs of the rail (1), within the rail (1), and is intended for supplying power to motor-driven load-transporting means, wherein the conductor line (3) has a closed form, which is protected against access from the outside, and can be used in an operator region,
- a chassis and/or running gear which is assigned to the at least one load-transporting means and comprises a carrier element (2) with a U-shaped profile, of which the legs engage around the legs of the rail (1) and form bearing seats or bearing flanges for wheel or roller axles of the load-transporting means, and
- a gap which is provided between the conductor line (3) and rail (1) and can be used multifunctionally for connecting rail elements, for providing supply along a conductor rail and/or for elevating a rail.

2. Transporting apparatus according to Claim 1,
in the case of which the angled leg ends (11, 12) form upper and lower running surfaces for a respective pair of wheels or rollers (21, 23; 22, 24) on load-transporting means, and in the case of which a first pair of wheels or rollers (21, 23) is arranged at a first angled leg end (11), and in the case of which a second pair of wheels or rollers (22, 24) is arranged at a second angled leg end (12), and in the case of which a first wheel or a first roller (21, 22) of a pair of wheels or rollers is in frictional connection with an upper running surface, and in the case of which a second wheel or a second roller (23, 24) of a pair of wheels or rollers is in frictional connection with a lower running surface.

3. Transporting apparatus according to Claim 2,
in the case of which the wheels or rollers (21, 23; 22, 24) of a pair of wheels or rollers are prestressed in relation to one another by means of a bracing mechanism.

4. Transporting apparatus according to either of Claims 2 and 3,
in the case of which the first roller (21, 22) of a pair of rollers is respectively configured in the form of a carrying roller, and in the case of which the second roller (23, 24) of a pair of rollers is respectively configured in the form of a counterpressure roller.

5. Transporting apparatus according to one of Claims 2 to 4,
in the case of which the legs of the rail (1) and the legs of the carrier element (2) have arranged between them in each case at least one guide roller (25, 26), which is in form-fitting connection with a leg of the rail (1) and with a leg of the carrier element (2).

6. Transporting apparatus according to one of Claims 1 to 5,
in the case of which the rail (1), the conductor line (3) or coil arrangement and the carrier element (2) of the load-transporting means are arranged essentially concentrically in relation to one another.

7. Transporting apparatus according to one of Claims 1 to 6, in the case of which the rail (1) comprises a plurality of rail segments which are connected to one another by means of butt-joint elements (15).

8. Transporting apparatus according to one of Claims 1 to 7, in the case of which the rail (1) extends along at least one sloping or synchronous section, and in the case of which, along the sloping or synchronous section, a circulating chain with driver elements for load-transporting means is arranged between the legs of the rail (1), within the rail, instead of, or in addition to, the conductor line (3) or coil arrangement.

9. Transporting apparatus according to one of Claims 1 to 7, in the case of which the rail (1) extends along at least one sloping or synchronous section, and in the case of which the rail (1), at least along the sloping or synchronous section, has a hollow chamber (13) for accommodating a first portion of a circulating chain with driver elements for load-transporting means, and in the case of which the rail (1), at least along the sloping or synchronous section, has a chamber (14) which is open along one leg and is intended for accommodating a second portion of the circulating chain.

10. Transporting apparatus according to Claim 9,
in the case of which the driver elements are brought into engagement with one another by a guide control means at a start of a sloping or synchronous section.

11. Transporting apparatus according to either of Claims 9 and 10,
in the case of which at least one driver element is fitted rigidly on a vehicle body and rail-suspension means enclose the at least one rigidly suspended driver element in a C-shaped manner.

12. Transporting apparatus according to one of Claims 9 to 11,
in the case of which the chamber (14), which is open along one leg, accommodates a chain portion, or a similarly acting pulling means, which runs in the pulling direction, and in the case of which the hollow chamber (13) accommodates a returning chain portion.

13. Transporting apparatus according to one of Claims 1 to 12,
in the case of which the rail (1) and the carrier element (2) are arranged with their legs in opposite directions to one another, and in the case of which the annular conductor line (3) is arranged with its contacts directed towards the carrier element (2) of the load-transporting means, and in the case of which the load-transporting means is a vehicle of an overhead monorail system.

14. Transporting apparatus according to one of Claims 1 to 12,
in the case of which the rail (1) and the carrier element (2) are arranged with their legs in the same direction as one another, and in the case of which the annular conductor line (3) is arranged with its contacts directed away from the carrier element (2) of the load-transporting means, and in the case of which the load-transporting means is a vehicle of a floor monorail system.

15. Transporting apparatus according to one of Claims 1 to 14,
in the case of which the load-transporting means comprises an electric motor (4) and a current-collector arrangement, which has at least one contact in relation to the annular conductor line (3).

16. Transporting apparatus according to one of Claims 1 to 12,
in the case of which the load-transporting means comprises a linear motor, which forms an air gap with a coil arrangement arranged within the rail (1).

## Revendications

1. Dispositif de transport de marchandises légères à véhiculer, notamment de pièces de véhicule, comprenant
- au moins un moyen de transport de charge pour transporter au moins une charge 61, 62) le long d'un chemin de transport,
- au moins un rail (1), qui s'étend le long d'au moins un tronçon du chemin de transport et qui a un profil en forme de U, ayant des extrémités (11, 12) de branche coudées, qui forment, sur des moyens de transport de charge, au moins une première et une deuxième surface de roulement de paires (21 à 24) de roues ou de galets,
- une ligne (3) de contact, disposée entre des branches du rail (1) à l'intérieur du rail (1), pour alimenter en énergie des moyens de transport de charge entraînés par moteur, la ligne (3) de contact ayant une forme fermée, protégée vis-à-vis d'un accès de l'extérieur, et pouvant être utilisée dans une zone où se trouvent des ouvriers,
- un train de roulement et/ou un mécanisme de roulement, qui est associé au au moins un moyen de transport de charge et qui comprend un élément (2) de support, à profil en forme de U, dont les branches embrassent les branches du rail (1) et forment des sièges de palier ou des brides de palier pour des axes de roue ou de galet du moyen de transport de charge,
- un intervalle, qui est prévu entre la ligne (3) de contact et le rail (1) et qui peut être utilisée multifonctionnellement pour relier des éléments de rail, pour alimenter un rail en courant et/ou pour surélever un rail.

2. Dispositif de transport suivant la revendication 1,
dans lequel les extrémités (11, 12) de branche coudées forment des surfaces de roulement supérieure et inférieure, pour respectivement une paire (21, 23 ; 22, 24) de roues ou de galets de moyens de transport de charge, et dans lequel une première paire (21, 23) de roues ou de galets est disposée à une première extrémité (11) de branche coudée et dans lequel une deuxième paire (22, 24) de roues ou de galets est disposée à une deuxième extrémité (12) de branche coudée, et dans lequel une première roue ou un premier galet (21, 22), d'une première paire de roues ou de galets, est en relation de friction avec une surface de roulement supérieure, et dans lequel une deuxième roue ou un deuxième galet (23, 24), d'une paire de roues ou de galets, est en relation de friction avec une surface de roulement inférieure.

3. Dispositif de transport suivant la revendication 1,
dans lequel les roues ou les galets (21, 23 ; 22, 24) d'une paire de roues ou de galets sont précontraints l'un vers l'autre au moyen d'un dispositif de serrage.

4. Dispositif de transport suivant l'une des revendications 2 ou 3,
dans lequel le premier galet (21, 22) d'une paire de galets est conformé en galet porteur et dans lequel le deuxième galet (23, 24) d'une paire de galets est conformé en galet de contre-pression.

5. Dispositif de transport suivant l'une des revendications 2 à 4,
dans lequel il est disposé, entre les branches du rail (1) et les branches de l'élément (2) de support, respectivement au moins un galet (25, 26) de guidage, qui est en coopération à complémentarité de forme avec une branche du rail (1) et avec une branche de l'élément (2) de support.

6. Dispositif de transport suivant l'une des revendications 1 à 5,
dans lequel le rail (1), la ligne (3) de contact ou l'agencement de bobine et l'élément (2) de support du moyen de transport de charge sont disposés sensiblement concentriquement les uns par rapport aux autres.

7. Dispositif de transport suivant l'une des revendications 1 à 6,
dans lequel le rail (1) comprend plusieurs segments de rail reliés entre eux au moyen d'éléments (15) de liaison bout à bout.

8. Dispositif de transport suivant l'une des revendications 1 à 6,
dans lequel le rail (1) s'étend le long d'au moins une section de montée ou de synchronisme et dans lequel, le long de la section de montée ou de synchronisme, au lieu ou en plus de la ligne (3) de contact ou du dispositif de bobine, est disposée, entre les branches du rail (1) , à l'intérieur du rail, une chaîne sans fin d'éléments d'entraîneur de moyens de transport de charge.

9. Dispositif de transport suivant l'une des revendications 1 à 7,
dans lequel le rail (1) s'étend le long d'au moins une section de montée ou de synchronisme et dans lequel le rail (1) a, au moins le long de la section de montée ou de synchronisme, une chambre (13) creuse de réception d'un premier tronçon d'une chaîne sans fin ayant des éléments d'entraîneur des moyens de transport de charge, et dans lequel le rail (1) a, au moins le long de la section de montée ou de synchronisme, une chambre (14) ouverte sur une branche pour recevoir un deuxième tronçon de la chaîne sans fin.

10. Dispositif de transport suivant la revendication 9,
dans lequel les éléments d'entraîneur sont mis en prise les uns avec les autres, à un début d'une section de montée ou de synchronisme, par une commande à coulisse.

11. Dispositif de transport suivant l'une des revendications 9 ou 10,
dans lequel au moins un élément d'entraîneur est mis rigidement sur un corps de véhicule et des suspensions de rail entourent, en forme de C le au moins un élément d'entraîneur suspendu rigidement.

12. Dispositif de transport suivant l'une des revendications 9 à 11,
dans lequel la chambre (14), ouverte sur une branche, reçoit un tronçon de chaîne courant dans le sens de traction, ou un moyen de traction équivalent, et dans lequel la chambre (13) creuse reçoit un tronçon de chaîne de retour.

13. Dispositif de transport suivant l'une des revendications 9 à 12,
dans lequel le rail (1) et l'élément (2) de support sont disposés en ayant leurs branches opposées les unes aux autres et dans lequel la ligne (3) à bague collectrice est disposée en ayant ses contacts tournés vers l'élément (2) de support du moyen de transport de charge, et dans lequel le moyen du transport de charge est un véhicule d'un système de voie aérienne électrique.

14. Dispositif de transport suivant l'une des revendications 1 à 12,
dans lequel le rail (1) et l'élément (2) de support sont disposés l'un par rapport à l'autre, en ayant leurs branches dans la même direction, et dans lequel la ligne (3) à bague collectrice est disposée en étant éloignée par ses contacts de l'élément (2) de support du moyen de transport de charge, et dans lequel le moyen de transport de charge est un véhicule d'un système de voie suspendue électrique.

15. Dispositif de transport suivant l'une des revendications 1 à 14,
dans lequel le moyen de transport de charge est un moteur (4) électrique et comprend un agencement de prise de courant, qui a au moins un contact avec la ligne (3) à bague collectrice.

16. Dispositif de transport suivant l'une des revendications 1 à 12,
dans lequel le moyen de transport de charge comprend un moteur linéaire, qui forme un entrefer avec un agencement de bobines disposé à l'intérieur du rail (1).
